# EUROPÄISCHE PATENTANMELDUNG

(11) **EP 1 247 999 A2**
(43) Veröffentlichungstag der Anmeldung: **09.10.2002**
(21) Anmeldenummer: 02006906.8
(22) Anmeldetag: 26.03.2002
(51) Int. Cl.: F16B 7/18, F16B 37/04, F16L 3/24

(54) **Montagesystem**

(30) Priorität: 26.03.2001 DE 20105343 U
(71) Anmelder: Ortwein, Ernst-Georg, 73061 Ebersbach (DE)
(72) Erfinder: Ortwein, Ernst-Georg, 73061 Ebersbach (DE)
(74) Vertreter: Fürst, Siegfried

(57) **Zusammenfassung**

Die Erfindung betrifft ein Montagesystem für die Anwendung im Bereich von Sanitäranlagen, Sanitäreinrichtungen, Trockenbauinstallationen, z.B. Vorwandinstallation, sowie Tragkonstruktionen oder Traggestelle, insbesondere für Befestigungskonstruktionen, welches kostengünstig mit einfachem technischen Fertigungsaufwand herstellbar sowie einfach und funktionell variabel einsetzbar und montierbar ist und zugleich eine verbesserte Handhabung der einzelnen Bauteile ermöglicht.

Hierzu umfasst das neue Montagesysteme mindestens einen Profilkörper, ein oder mehrere Steckverbinder sowie ein oder mehrere Montageelemente nebst einem oder mehreren zugeordneten Befestigungselementen, wobei jedes Montageelement mittels einem oder mehreren der in den Profilkörper einführbaren Steckverbinder an dem Profilkörper befestigbar ist und, wobei jeder Steckverbinder mit dem Montageelement durch wenigstens ein Befestigungselement gekoppelt ist. Bevorzugt ist dabei vorgesehen, dass der Profilkörper als U-förmige Profilschiene ausgebildet und längen- und/oder formveränderbar ist, wobei der Profilkörper längs seines Korpus über längere Strecke offene und/oder geschlossene Abschnitte aufweist, die formveränderbar sind.

## Beschreibung

Die Erfindung betrifft ein Montagesystem für die Anwendung im Bereich von Sanitäranlagen, Sanitäreinrichtungen, Trockenbauinstallationen sowie Tragkonstruktionen oder Traggestelle, insbesondere für Befestigungskonstruktionen.

Aus dem Bereich der Trockenbau-lnstallationen sind Vorwandinstallationselemente in Form eines Metalltraggestells oder eines Einzelelementes bekannt, das einen Grundrahmen bildet, an dem einzelne Installationsmodule befestigt werden.
Anschließend wird der Grundrahmen mit dem Modul mit Gipskartonplatten oder anderen Verkleidungsmaterialien abgedeckt, die dann zum Beispiel die Oberfläche für eine Befliesung bilden.
Das Metallgestell kann dabei als Baukastensystem aus Rohrvollprofilelementen aufgebaut sein, deren einzelne Profilkörper mittels Verbindungselementen, beispielsweise Profilverbinder, Winkel und Verbindungsstücke untereinander verbunden sind.
Bei den bekannten Montagesystemen für Sanitärarmaturen bestehen die Rohrprofilelemente dabei aus einem Vierkantprofil, das zwar eine gute Stabilität bildet, aber noch Nachteile, insbesondere bearbeitungstechnische Nachteile, besitzt. Beispielsweise ist beim Ablängen ein Bearbeiten nur durch aufwendiges und zudem geräuschintensives Sägen möglich. Weiterhin sind oftmals zusätzliche spezielle Montagewinkel und Verbinder zur Wand- oder Deckenbefestigung notwendig, was einen erhöhten Materialund Montageaufwand, insbesondere in der Lagerhaltung, bedingt. Ein weiterer wesentlicher Nachteil ist, dass bei der Verbindung von einzelnen Profilen Verbindungstoleranzen oftmals nur mit einem Verlust an Stabilität oder mit zusätzlichen Verbindungslaschen zur Aussteifung des Tragsystems ausgeglichen werden können. Die Verbindung der Profilteile erfolgt dabei hauptsächlich durch Schraubverbindungen.
Aus der DE 100 18 287 A1 ist ein Installationselement für den Trockenbau und ein Verfahren zu dessen Installation bekannt, in dem zuerst ein Grundrahmen einer Vorinstallationswand an einer vorhandenen Baukörperwand befestigt wird, anschließend ein WC-Modul werkzeuglos klickverschlußartig in den Grundrahmen eingehängt wird und die als Modulfüße bezeichneten Bodenstützen mit dem WC-Modul oder einem Hilfsrahmen befestigt werden, wobei sich die Bodenstützen am Untergrund oder an einer Bodenstrebe des Grundrahmens abstützen.

Ausgehend von diesem Stand der Technik liegt der Erfindung die Aufgabe zugrunde, ein Montagesystem für die Anwendung im Bereich von Sanitäranlagen, Sanitäreinrichtungen, Trockenbauinstallationen sowie Tragkonstruktionen oder Traggestelle, insbesondere für Befestigungskonstruktionen, zu schaffen, das kostengünstig mit einfachem technischen Fertigungsaufwand herstellbar sowie einfach und funktionell variabel einsetzbar und montierbar ist, zugleich eine verbesserte Handhabung der einzelnen Bauteile ermöglicht.

Zur Lösung dieser Aufgabe wird ein Montagesystem gemäss dem Patentanspruch 1 vorgeschlagen. Die nachgeordneten Patentansprüche 2 bis 19 offenbaren Weiterbildungen und vorteilhaften Ausgestaltungen des erfinderischen Grundgedankens zum neuen Montagesystem.

Das neue Montagesysteme umfasst mindestens einen Profilkörper, ein oder mehrere Steckverbinder sowie ein oder mehrere Montageelemente nebst einem oder mehreren zugeordneten Befestigungselementen, wobei jedes Montageelement mittels einem oder mehreren der in den Profilkörper einführbaren Steckverbinder an dem Profilkörper befestigbar ist und, wobei jeder Steckverbinder mit dem Montageelement durch wenigstens ein Befestigungselement gekoppelt ist. Bevorzugt ist dabei vorgesehen, dass der Profilkörper als U-förmige Profilschiene ausgebildet und längen- und/oder formveränderbar ist, wobei der Profilkörper längs seines Korpus über längere Strecke offene und/oder geschlossene Abschnitte aufweist, die formveränderbar sind.

Vorteilhaft ist zudem, dass die offenen und geschlossenen Abschnitte des Profilkörpers partiell oder über die gesamte Länge des Profilkörpers eine identische Form und Größe aufweisen und offene Abschnitte des Profilkörpers durch Montageelemente schließbar und miteinander verbindbar sind, wobei die unterschiedlichen Montageelemente zur Aufnahme (Befestigung) spezieller Halterungen vorgesehen sind. Dies hat den Vorteil, dass das Montagesystem für viele Einsatzgebiete und Befestigungsanforderungen einsetzbar und bei Montagearbeiten vor Ort schnell an unterschiedliche Bedingungen anpassbar ist, insbesondere Maßtoleranzen ohne Nacharbeit und Verlust an Stabilität ausgeglichen werden können.

Eine vorteilhafte Ausführungsform wird darin gesehen, dass die U-förmige Profilschiene aus einer Basis mit von selbiger abragenden, im wesentlichen gleichgerichtet sowie parallel zueinander und mit Abstand voneinander erstreckende Schenkel besteht, wobei die Enden dieser Schenkel zumindest nach innen ragen, insbesondere L-förmig - das "L" auf den Kopf gestellt - umgebogen sind, so dass in den offenen Abschnitten des Profilkörpers in der Montagelage verschiebbar vorgesehenen Steckverbinder auch an deren vierter Mantelfläche zumindest teilweise umgriffen sind. Dabei ist das Montageelement mittels Steckverbinder und Befestigungselement an dem Profilkörper derart bewegbar, dass es außenseitig längs dessen Korpus in unterschiedlichen Lagen positionierbar und arretierbar ist, so dass durch diese einfache und schnelle Positionierung und Befestigung eine Montagezeitersparnis erhalten wird.

Eine weitere vorteilhafte Ausführungsform wird darin gesehen, dass die nach innen ragenden Enden der Schenkel des Profilkörpers in Profillängsrichtung verlaufende und nach oben gerichtete Aufkantungen aufweisen, deren Höhe und Weite dem aufsetzbaren Montageelement entspricht. Durch das/die aufgesetzten Montageelement/-elemente, deren Randbereiche an die Aufkantungen angreifen bzw. zumindest anliegen, wird der U-förmige Profilkörper zumindest abschnittsweise und bei Bedarf über längere Strecken zu einem Vollkörper ausgebildet, welche die Stabilitätswerte eines geschlossenen Quaders besitzt.

Eine ebenso bevorzugte Ausführungsform wird darin gesehen, dass der Steckverbinder im wesentlichen rechteckig ausgebildet ist, wobei zwei zueinander diagonal gegenüberliegende Ecken Abflachungen aufweisen derart, dass diese Abflachungen zwei parallel zueinander ausgebildete, stumpfwinklig zu den Seitenflächen und den Stirnflächen des Steckverbinders liegende Schiebeflächen bilden, und zwischen ihnen eine Abstandsbreite vorhanden ist.
Die Abstandsbreite ist so gewählt, dass der Steckverbinder mit diesen Schiebeflächen im Profilkörper längsverschiebbar ist. Im Steckverbinder ist in einer Nut ein Verbindungselement mit Aufnahmen für Befestigungselemente angeordnet. Dieses Verbindungselement hat ebenfalls Schrägflächen, die in Solllage mit den Schiebeflächen des Steckverbinders fluchten.
Während der Grobpositionierung des Steckverbinders in dem Profilkörper liegen die Schiebeflächen des Steckverbinders im wesentlichen parallel zu den Innenflächen der Schenkel des Profilkörpers. Bei Erreichen oder kurz vor Erreichen der vorgesehenen Position wird der Steckverbinder in dem Profilkörper so gedreht, dass nunmehr die Seitenflächen des Steckverbinders im wesentlichen parallel zu den Innenflächen der Schenkel des Profilkörpers liegen. Der Abstand dieser Seitenflächen zueinander ist dabei so gewählt, dass zwischen diesen Seitenflächen und den Innenflächen der beiden Schenkel des Profilkörpers ein leichter Klemmsitz entsteht.
Dieser Klemmsitz ist so ausgelegt, dass einerseits bei aufwärts gerichtetem Profilkörper der Steckverbinder durch das Eigengewicht seines Korpus des aufgenommenen Verbindungselementes nebst des Befestigungselementes nicht seine eingenommene Ortslage verändert und andererseits aber so ausgelegt ist, dass mit geringstem Kraftaufwand der Steckverbinder in dem Profilkörper zur Nachjustierung seiner vorgesehenen Position bewegt werden kann. Das Befestigungselement ist derart im Verbindungselement vorpositioniert, dass das Montageelement unter den Kopfbereich des Befestigungselementes geschoben werden kann bzw. das Befestigungselement mit seinem Kopfbereich, durch Feinpositionierung des Steckverbinders, über das Montageelement schiebbar ist. Für Befestigungselemente, die mit einem Zylinderschaft im Verbindungselement axial bewegbar angeordnet werden können, ist im Montageelement jeweils ein Durchbruch vorgesehen, in den der Schaft des Befestigungselementes hindurchgreifen kann. Mit dieser neuen Art der Befestigung wird eine schnelle und kostengünstige Montage durch Direktbefestigung von Montage- und Befestigungselementen erhalten und Adapterelemente können entfallen. Diese neue Art von Befestigungssystemen gestattet auch die so genannte 'Einhandbedienung', bei welcher der Monteur das Gegenelement einer Verbindung, z.B eine Schraubverbindung, hier der Steckverbinder mit Verbindungselement, während der Verschraubung nicht in seiner Position halten muss.

Vorteilhaft ist auch vorgesehen, dass das Montageelement als universelles Installationsprofil für viele Einsatzgebiete als T-bzw. Doppel-T-Horizontal-verbinder auf den Profilkörper aufsetzbar ist und mittels des speziellen Steckverbinders positionierbar und arretierbar ist, wobei das Montagelement als weitere bevorzugte Varianten auch als Winkel- bzw. Winkelquerverbinder, als Außen-, verstellbarer Längen- oder Befestigungswinkel oder als Waschtisch- oder WC-Halter vorgesehen ist.

Eine bevorzugte Weiterbildung wird noch darin gesehen, dass das Befestigungselement zur Befestigung des Montageelementes an dem Steckverbinder als Klemmbolzen mit einem Zapfen ausgebildet ist, der durch den Durchbruch des Montageelementes sowie eine im Verbindungselement vorgesehene Durchgangsbohrung mit einer Längsnute steckbar und so drehbar ist, dass die durchgriffenen Bauelemente des Montageelementes, also das Verbindungselement, der Profilkörper und das Montageelement gegeneinander verspannbar sind, wobei zur Befestigung eine Selbsthemmung der Keilverbindung erfolgt, so dass durch diese Ausbildung des Befestigungselementes ein Monteur vor Ort bei der Montage des Montagesystems eine einfache Handhabung erhält.

Vorteilhafte Varianten zur Befestigung des Montageelementes werden darin gesehen, dass das Verbindungselement einen zylindrischen Bolzen aufweist, auf den eine Klemmkappe mit einer Nase aufsetzbar ist, wobei durch Drehung der Klemmkappe mittels eines in der Klemmkappe ausgebildeten Innensechskant durch einen Schlüssel und gleiten der Nase an einer Seitenwand der unter einem Winkel umlaufenden Nut alle beteiligten Bauelemente mit dem Profilkörper gegeneinander verspannbar sind, dass die Klemmkappe einen Hebel zum Drehen der Klemmkappe aufweist oder dass am Montageelement ein zylindrischer Bolzen mit einem Ansatz befestigt ist, indem ein Exzenterhebel mittels eines Bolzens gelagert ist, wobei zumindest durch Drehung des Exzenterhebels in eine Solllage das Verspannen der Bauelemente erfolgt, ein Herumkippen des Exzenterhebels kann das Verspannen noch verstärken.

Durch das erfindungsgemäße Montagesystem wird ein variables, vielfach kombinierfähiges und auf sehr viele Gegebenheiten anpassbares Montagesystem geschaffen, das, entgegen dem Trend in der Verbindungstechnik, durch einfache Funktionsprinzipien leicht zu montieren und positionieren ist. Die Ausbildung des Profilkörpers als U-förmige Profilschiene sichert ein schnelles Ablängen vor Ort auf der Baustelle durch einfache, schnelle und geräuscharme Trennung mit einer mobilen, handbetätigbaren Einwegschneideinrichtung, z.B. eine handbetätigte Stanzschere. Der Monteur hat einen hohen Komfort an Montagefreiheit durch einen schnell zu fixierenden Steckverbinder und unterschiedliche variable Befestigungselemente für das Montageelement und gleichzeitig unterschiedliche variable Montageelemente zur Verfügung.

Das neue Montagesystem wird folgend anhand von in Zeichnungen dargestellten Ausführungsbeispielen näher erläutert.
Die Zeichnungen zeigen in schematischer Darstellung das erfindungsgemäße Montagesystem in Einzelheiten und in den verschiedenen Ausführungsformen in Verbindung mit den unterschiedlichen Montageelementen. Es zeigen:
- Fig. 1: ein erfindungsgemäßes Montagesystem in Gesamtansicht;
- Fig. 2: einen Steckverbinder des Montagesystems in Draufsicht;
- Fig. 3: ein Verbindungselement des Steckverbinders in Draufsicht;
- Fig. 4a: ein erstes Ausführungsbeispiel eines Befestigungselementes in Draufansicht;
- Fig. 4b: das erste Ausführungsbeispiel in Seitenansicht im Schnitt;
- Fig. 4c: das erste Ausführungsbeispiel in Rückansicht;
- Fig. 5a: ein zweites Ausführungsbeispiel eines Befestigungselementes in Draufansicht;
- Fig. 5b: das zweite Ausführungsbeispiel in Seitenansicht im Schnitt;
- Fig. 5c: das zweite Ausführungsbeispiel in Vorderansicht ohne Klemmkappe;
- Fig. 6a: ein drittes Ausführungsbeispiel eines Befestigungselementes in Draufansicht;
- Fig. 6b: das dritte Ausführungsbeispiel in Seitenansicht im Schnitt;
- Fig. 7a: ein viertes Ausführungsbeispiel eines Befestigungselementes in Draufansicht;
- Fig. 7b: das vierte Ausführungsbeispiel in Seitenansicht im Schnitt;
- Fig. 8: eine Gestaltungsvariante des viertes Ausführungsbeispiels in teilweiser Schnittdarstellung;
- Fig. 9a, 9b: in Ansichten ein Ausführungsbeispiel eines Montageelementes als Horizontal-T-Verbinder;
- Fig. 10a bis 10c: in Ansichten ein Ausführungsbeispiel eines Montagelementes als Winkelverbinder;
- Fig. 11a und 11b: in Ansichten ein Ausführungsbeispiel eines Montageelementes als verstellbarer Außenwinkel;
- Fig. 12a bis 12c: in Ansichten ein Ausführungsbeispiel eines Montageelementes für den Boden/Wandbereich als Befestigungswinkel;
- Fig. 13a bis 13c: in Ansichten ein Ausführungsbeispiel eines Montageelementes als Winkel- Querverbinder;
- Fig. 14a, 14b: in Ansichten ein Ausführungsbeispiel eines Montageelementes als Verlängerungswinkel;
- Fig. 15a, 15b: in Ansichten ein Ausführungsbeispiel eines Montageelementes als Deckenwinkel;
- Fig. 16a, 16b: in Ansichten ein Ausführungsbeispiel eines Montageelementes als Waschtischhalter;
- Fig. 17a, 17b: in Ansichten ein Ausführungsbeispiel eines Montageelementes als WC-Halter;
- Fig. 18a, 18b: in Ansichten ein Ausführungsbeispiel eines Montageelementes als Unterlegprofil;
- Fig. 19a, 19b: in Ansichten ein Ausführungsbeispiels eines Montageelementes als Außenwinkel;
und
- Fig. 20a bis 20c: die Anwendung des Montagesystems als verkleidbare Rohrführung, mit Details.

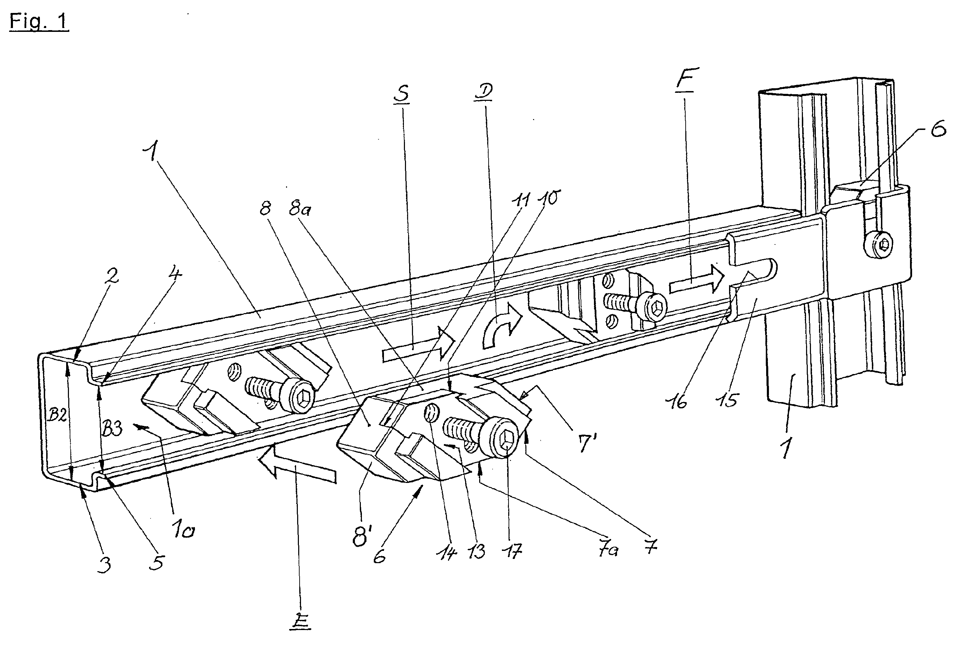

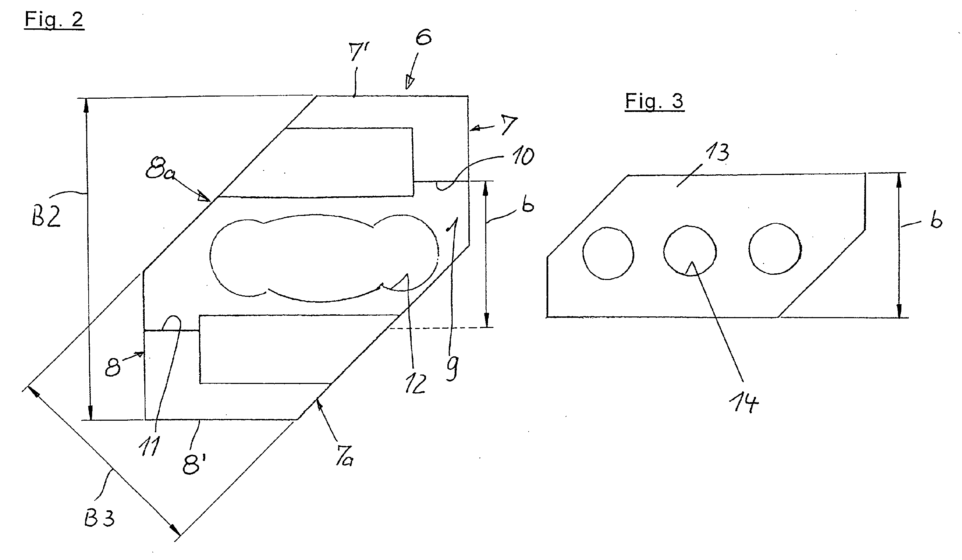

Die Figur 1 zeigt ein erfindungsgemäßes Montagesystem, bestehend aus einem Profilkörper 1, der als U-förmige Profilschiene ausgebildet ist, mit einer Basis 1a, von der im wesentlichen gleichgerichtete sowie parallel zueinander und mit Abstand voneinander geführte Schenkel 2, 3 abragen.
Die Schenkel 2 und 3 des offenen Abschnittes des Profilkörpers 1 weisen hier L-förmig nach innen gerichtete, bevorzugt abgewinkelte Endbereiche auf, wobei die nach innen umgebogenen Endbereiche der Schenkel 2, 3 des Profilkörpers 1 in Profillängsrichtung verlaufende und, in Schenkelrichtung gesehen, nach oben gerichtete Aufkantungen 4, 5 aufweisen, deren Höhe und Weite dem aufsetzbaren Montageelement 15 entsprechen. Die Enden 4, 5 der Schenkel 2, 3 des Profilkörpers 1 umgreifen, in dieser Darstellung, ab dem Arbeitsschritt "F" außerdem einen in einer Montagesolllage befindlichen Steckverbinder 6 abschnittsweise auch an dessen vierter Mantelfläche. Der Steckverbinder 6 ist gemäß Figuren 1 bis 3 im wesentlichen rechteckig ausgebildet ist, wobei zwei einander diagonal gegenüberliegende Ecken Abflachungen 7a, 8a aufweisen, so dass zwei weitere, parallel zueinander ausgebildete Körperflächen mit der Abstandsbreite B3 entstehen und wobei der Steckverbinder 6 mit diesen, seinen Schiebeflächen 7a, 8a im Profilkörper 1 leicht längsverschiebbar ist.
Der Steckverbinder 6 weist gemäß Figur 2 eine Nut 9 mit den Begrenzungsflächen 10, 11 auf, in welcher ein Verbindungselement 13 mit Aufnahmen 14 für Befestigungselemente, beispielsweise eine Zylinderkopfschraube 17 angeordnet ist. Die Nut 9 besitzt in Längserstreckung einen in etwa mittig liegenden, langlochartigen Durchbruch 12, als Freiraum für das Befestigungselement, hier die Zylinderkopfschraube 17, und wirkt zugleich gewichtsmindernd.
Der Steckverbinder 6 wird mit seinen Schiebeflächen 7a, 8a parallel zu den Aufkantungen in die Profilschiene 1 mit der inneren Breite B3 in selbige 1 eingesteckt - Pfeil "E" -, sodann zumindest vorpositioniert - Pfeil "S" - und dann zum Feinpositionieren in Pfeilrichtung "D" gedreht und sitzt sodann mit seinen Seitenflächen 7, 8 mit Reibhaftung an den Innenflächen der Schenkel der Profilschiene 1 an und kann dann in die entsprechende Solllage geschoben werden - Feinpositionierung "F" -, wobei nunmehr die Stirnflächen 7' und 8' in Längsrichtung des Profilkörpers 1 zeigen. Ohne dass ein Monteur im Weiteren mit einer Hand den Steckverbinder festhalten muss, können die folgenden Montagearbeiten, z. B. anhalten eines Montageelementes und gleichzeitige Betätigung des Befestigungselementes, mit beiden Händen ausgeführt werden; es besteht somit für den Monteur größtmögliche Handlungsfreiheit.

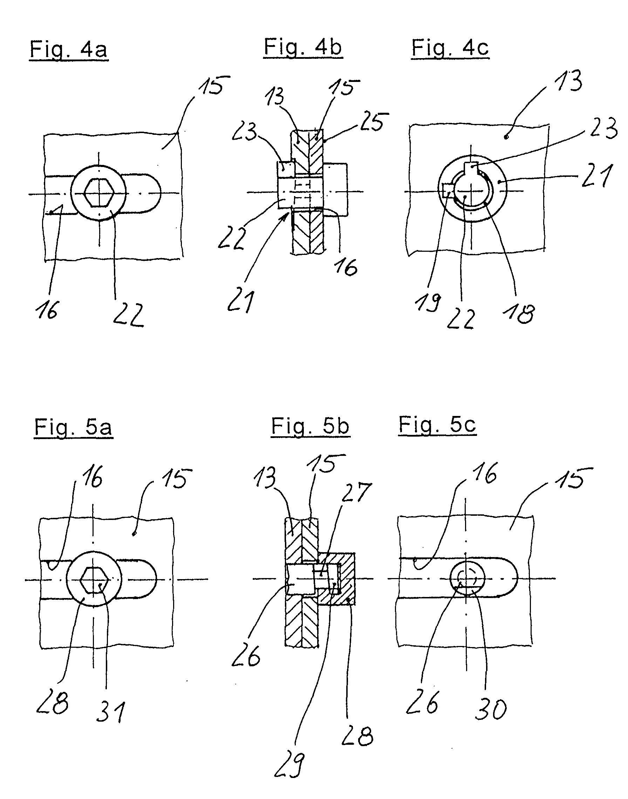

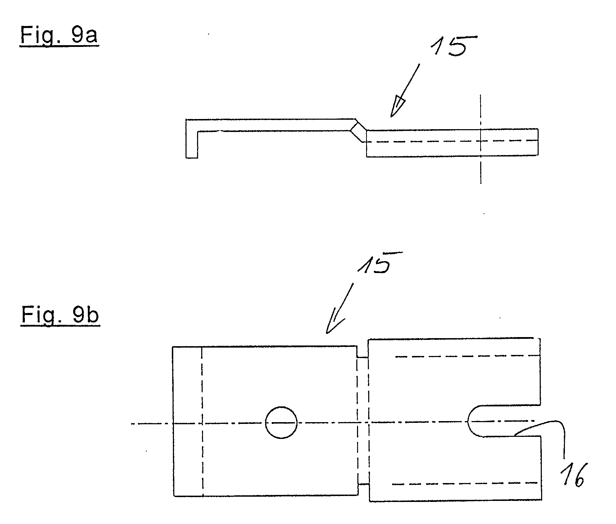

Die abgewinkelten Enden 4, 5 des Profilkörpers 1 weisen weiterhin in Profillängsrichtung verlaufende und nach oben gerichtet Aufkantungen auf, deren Größe der Größe der abgewinkelten Enden eines als Halterungselement unterschiedlich ausgebildeten aufsetzbaren Montageelementes 15 entsprechen. Das Montageelement 15 ist dabei mittels unterschiedlicher in den Figuren 4 bis 8 näher dargestellten Befestigungsmöglichkeiten an dem Steckverbinder 6 und dem Profilkörper 1 befestigbar und längs des Profilkörpers 1 in unterschiedlichen Lagen positionierbar.
Die unterschiedlichsten Ausführungsformen des Montageelementes 15 sind in den Figuren 9 bis 19 dargestellt.

Die Figuren 4 bis 8 zeigen Befestigungsmöglichkeiten für die in den Figuren 9 bis 19 dargestellten verschiedenen Ausführungsformen des Montageelementes 15 mittels Keil und Exzenter.
Die Figuren 4a bis 4c zeigen eine erste Ausführungsform zur Befestigung der Montageelemente 15. Im Montageelemente 15 ist ein Durchbruch 16 angeordnet. Das Verbindungselement 13 des Steckverbinders 6 besitzt eine Durchgangsbohrung 18 mit Längsnute 19. Auf der Rückseite 20 des Verbindungselementes 13 wird die Durchgangsbohrung 18 mit einer keilförmigen Senkung 21
versehen. Der Klemmbolzen 22 besitzt einen Zapfen 23. Beim Montieren wird der Klemmbolzen 22 mit dem Zapfen 23 durch den Durchbruch 16 im Montageelemente 15 und die Durchgangsbohrung 18 mit Längsnute 19 gesteckt. Der Abstand des Zapfens 23 von der Kopfanlagefläche 24 des Klemmbolzens 22 entspricht dem Abstand der Grundfläche der keilförmigen Senkung 21 zur Vorderfläche 25 des Montageelementes 15. Beim Einstecken des Klemmbolzens 22 in die Durchgangsbohrung 18 mit Längsnute 19 kann durch das Eingreifen des Zapfens 23 in die Längsnute 19 durch anschließende Drehung des Klemmbolzens 22 der Steckverbinder 6 im nicht dargestellten Profilkörper 1 in die Klemmlage gedreht werden.
Wird der Klemmbolzen 22 vollständig durch die Durchgangsbohrung 18 des Verbindungselementes 13 gesteckt und weiter gedreht, werden durch die keilförmige Senkung 21 alle beteiligten Bauelemente, wie Montageelemente 15, Verbindungselementes 13 und Profilkörper 1 gegeneinander verspannt. Zur Befestigung ist Selbsthemmung der Keilverbindung notwendig, der Keilwinkel α muss kleiner sein als der Reibwinkel ρ.
In einem zweiten Ausführungsbeispiel entsprechend den Figuren 5a bis 5c ist am Verbindungselement 13 ein zylindrischer Bolzen 26 befestigt, beispielsweise eingeschraubt, eingenietet oder eingepresst. Im zylindrischen Bolzen 26 ist am Umfang eine umlaufende Nut 27 unter einem Neigungswinkel α eingebracht. Nach dem Einsetzen des Steckverbinders 6 mit Verbindungselement 13 in den Profilkörper 1 und Aufsetzen des Montageelementes 15 mit Durchbruch 16 wird auf den zylindrischen Bolzen 26 eine Klemmkappe 28 aufgesetzt. Die Klemmkappe 28 besitzt eine Nase 29, die nach dem Aufstecken der Klemmkappe 28 auf den zylindrischen Bolzen 26 in die umlaufende Nut 27 eingreift. Um das Aufstecken der Klemmkappe 28 zu ermöglichen, ist der erste Teil des zylindrischen Bolzens 26 bis zur umlaufenden Nut 27 mit einer Abflachung 30 versehen.
Durch die Drehung der Klemmkappe 28 werden durch Gleiten der Nase 29 der Klemmkappe 28 an der Seitenwand der unter dem Neigungswinkel α umlaufenden Nut 27 alle beteiligten Bauelemente, wie Montageelemente 15, Verbindungselement 13 und Profilkörper 1 gegeneinander verspannt. Die Drehung der Klemmkappe 28 erfolgt durch ein in der Klemmkappe 28 ausgebildetes Innensechskant 31, in das ein nicht dargestellter Schlüssel eingreift.

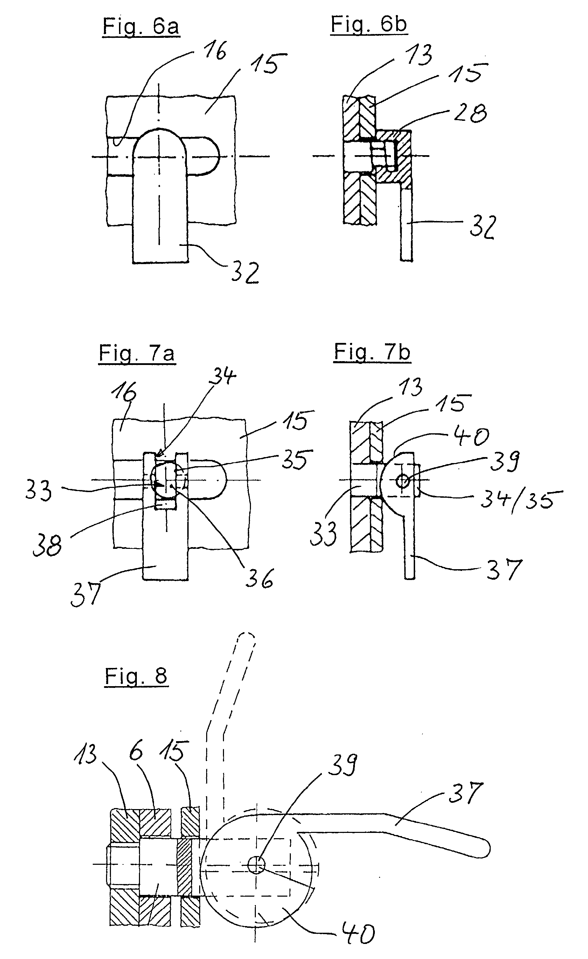

Das in den Figuren 6a und 6b dargestellte dritte Ausführungsbeispiel entspricht in seiner Wirkungsweise dem zweiten Ausführungsbeispiel. An der Klemmkappe 28 ist ein Hebel 32 angebracht, der das Drehen der Klemmkappe 28 und damit das Verspannen der beteiligten Bauelemente ohne zusätzlichen Schlüssel ermöglicht.

Die Figuren 7a und 7b zeigen ein viertes Ausführungsbeispiel. Am Montageelemente 15 ist ein zylindrischer Bolzen 33 befestigt. Am zylindrische Bolzen 33 sind zwei Flächen 34, 35 angearbeitet. Auf dem dadurch entstandenen prismatischen Ansatz 36 ist ein Exzenterhebel 37, der mit einem Schlitz 38 versehen ist, mittels eines Bolzens 39 gelagert. Nach dem Einsetzen des Steckverbinders 6 mit dem Verbindungselement 13 in den Profilkörper 1 und Aufsetzen des Montageelemente 15 mit dem Durchbruch 16 wird der Exenterhebel 37 in die Solllage gedreht. Durch das Herumkippen des Exzenterhebels 37 werden mittels der Exzenterfläche 40 alle beteiligten Bauelemente gegeneinander verspannt.

Die Figur 8 zeigt eine Gestaltungsvariante des vierten Ausführungsbeispiels.

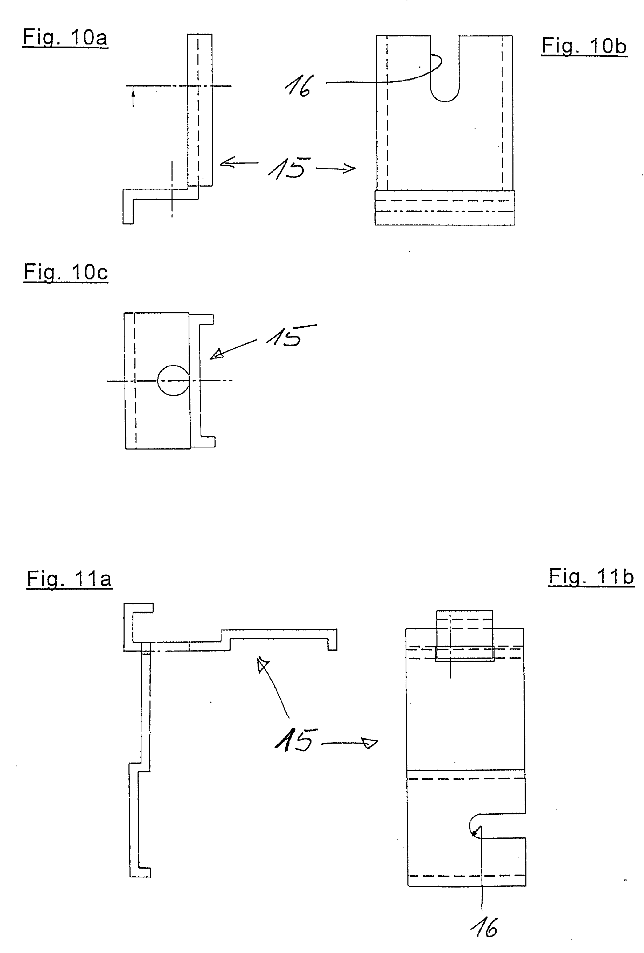

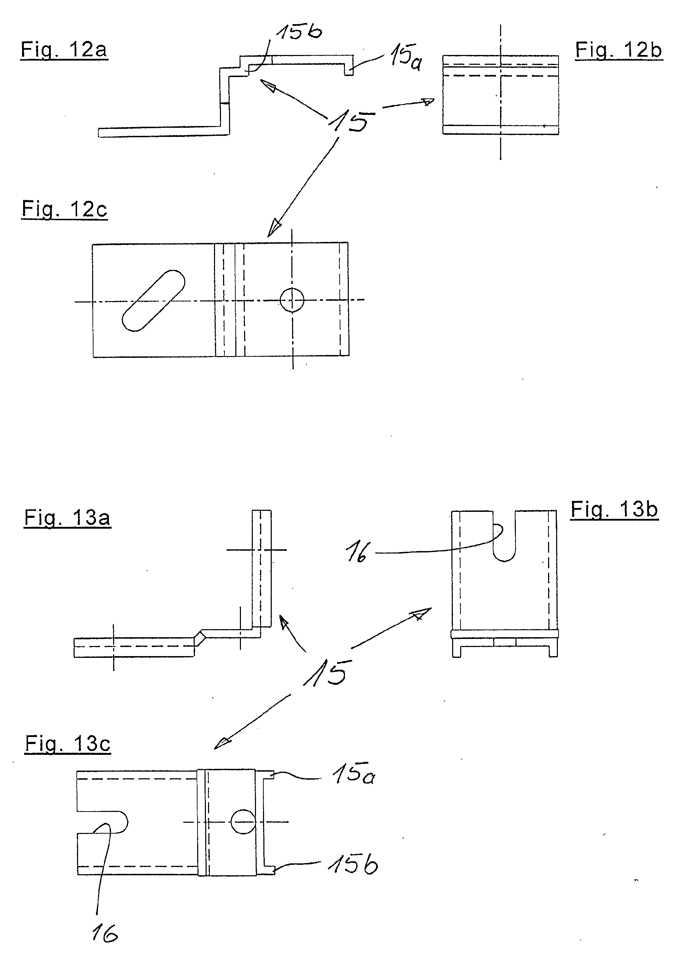

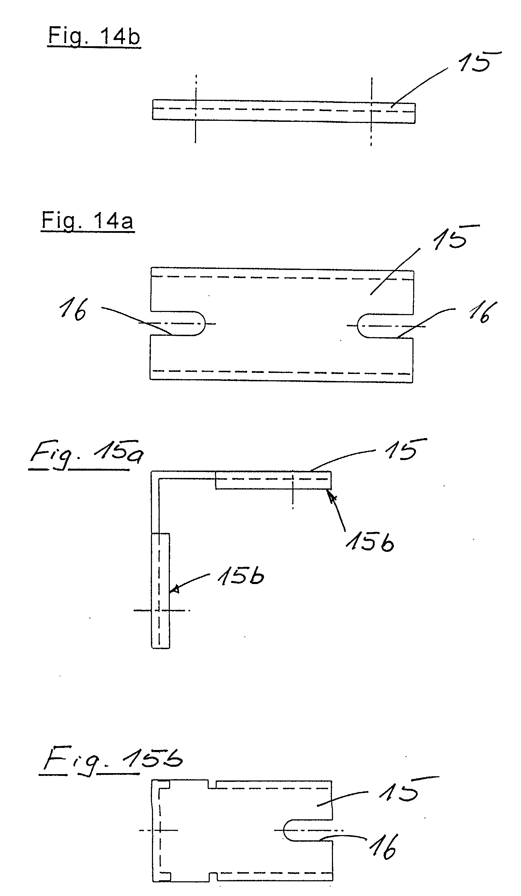

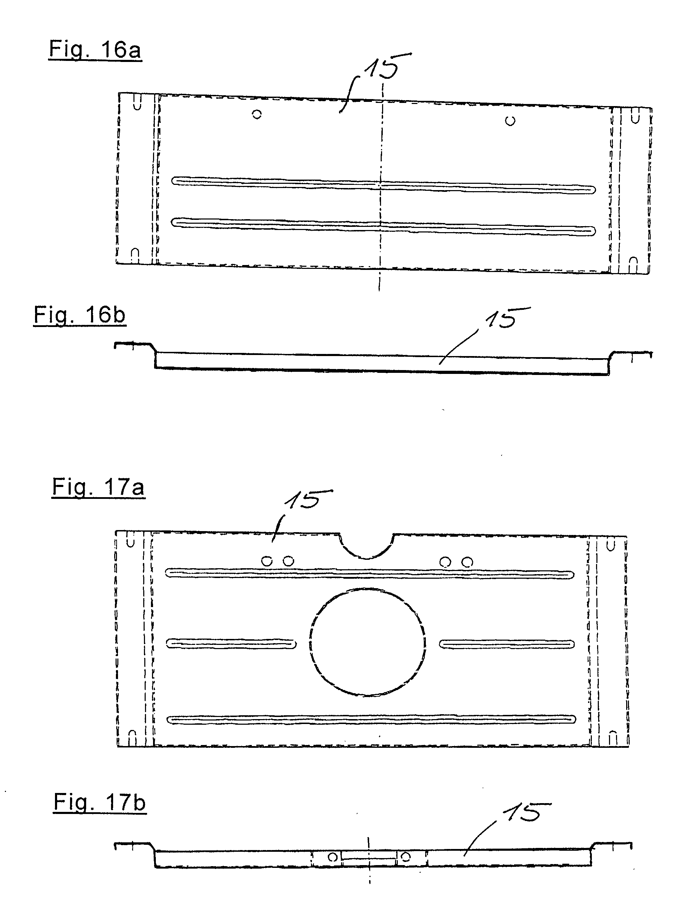

Die Figuren 9a und 9b zeigen eine Ausführungsform des Montageelementes 15 als Horizontal-T-Verbinder in zwei Ansichten; die Figuren 10a bis 10c das Montageelement 15 als Winkelverbinder in drei Ansichten; die Figuren 11 und 11b das Montageelement 15 als verstellbaren Außenwinkel in zwei Ansichten; die Figuren 12a bis 12b das Montageelement 15 als Befestigungswinkel für einen Boden/Wandbereich in drei Ansichten; die Figuren 13 bis 13c das Montageelement 15 als Winkel-Querverbinder in drei Ansichten und die Figuren 14 und 14b das Montageelement 15 als Verlängerungsteil in zwei Ansichten.
Weiterhin zeigen die Figur 16a und 16b das Montageelement 15 in der Ausführungsform als Waschtischhalter in zwei Ansichten und in die Figuren 17a und 17b selbigen als WC-Halter in zwei Ansichten.

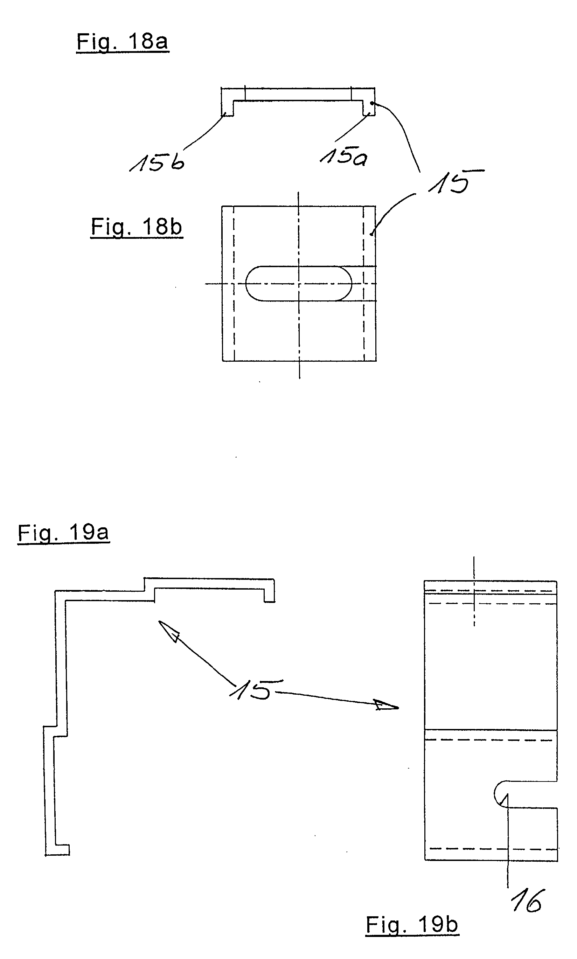

Die Figuren 18a und 18b zeigen ein Basiselement des Montagesystems in der Ausführungsform als Unterlegprofil in zwei Ansichten und die Figuren 19a und 19b die Ausführung als Außenwinkel in zwei Ansichten.

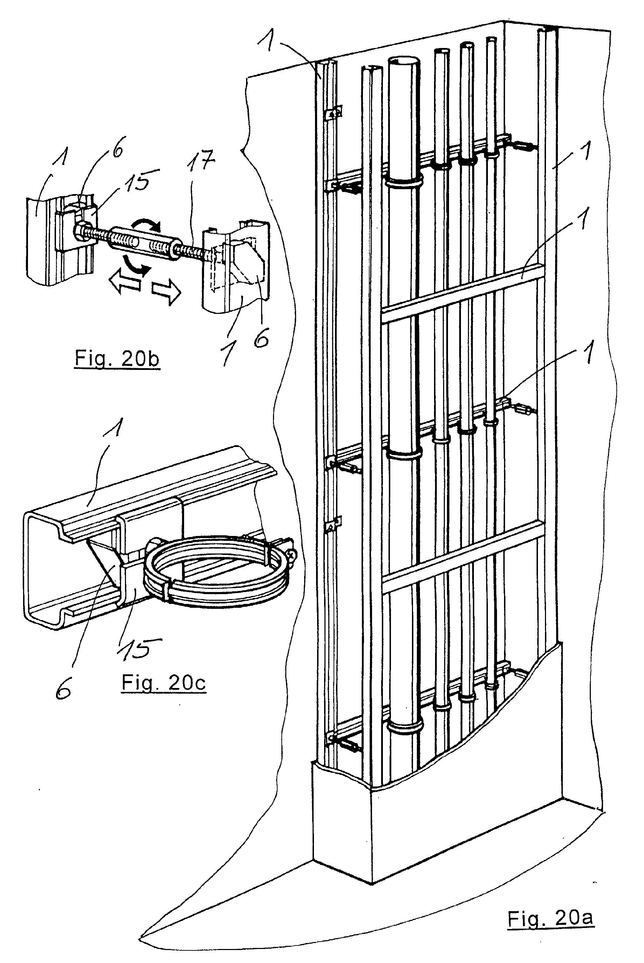

Die Figuren 20a bis 20c zeigen die Anwendung des neuen Montagesystems als verkleidbare Rohrführung. In der Figur 20a ist ein Ausschnitt eines Raumes gezeigt, bei dem in einem Eckbereich, vom Boden zur Decke aufragend, das neue Montagesystem in Anwendung für eine Rohrführung vorgesehen ist. Die Details der Verbindung der zueinander beabstandeten Profilkörper 1, hier die U-förmigen Profilschienen, sind in Figur 20b gezeigt. Die Anordnung von Rohrschellen an quergelegten Profilkörper 1 in dieser Tragkonstruktion mittels des neuen Steckverbinders zeigt die Figur 20c.

Alle in der vorstehenden Beschreibung erwähnten sowie auch die allein aus den Zeichnungen entnehmbaren Merkmale sind weitere Bestandteile der Erfindung, auch wenn sie nicht besonders hervorgehoben und in den Ansprüchen erwähnt sind.
Die Erfindung ist nicht auf die Ausführungsbeispiele beschränkt, sondern im Rahmen der Offenbarung vielfach variabel.

### Zusammenstellung der verwendeten Bezugszeichen:

- 1: Profilkörper
- 1a: Basis
- 2: Schenkel des Profilkörpers 1
- 3: Schenkel des Profilkörpers 1
- 4: Ende des Schenkels 2 des Profilkörpers 1
- 5: Ende des Schenkels 3 des Profilkörpers 1
- 6: Steckverbinder
- 7', 8': Stirnflächen (an Pos. 6)
- 7: Seitenfläche des Steckverbinders
- 8: Seitenfläche des Steckverbinders
- 7a, 8a: Schiebeflächen (Abflachungen an Pos. 6)
- 9: Nut im Steckverbinder
- 10: Begrenzungsfläche des Steckverbinders
- 11: Begrenzungsfläche des Steckverbinders
- 12: Durchbruch im Steckverbinder
- 13: Verbindungselement des Steckverbinders
- 14: Aufnahme für ein Befestigungselement im Steckverbinder
- 15: Montagelement
- 16: Durchbrüche im Montageelement
- 17: Befestigungselement
- 18: Durchgangsbohrung mit Pos. 19
- 19: Längsnute
- 20: Rückseite des Verbindungselementes
- 21: keilförmige Senkung
- 22: Klemmbolzen
- 23: Zapfen
- 24: Kopfanlagefläche des Klemmbolzens
- 25: Vorderfläche des Montageelementes
- 26: zylindrischer Bolzen
- 28: Klemmkappe
- 30: Abflachung
- 32: Hebel
- 34: Flächen des Bolzens 33
- 36: prismatischer Ansatz
- 38: Schlitz
- 40: Exenterfläche
- 27: Nut
- 29: Nase der Klemmkappe
- 31: Innensechskant
- 33: zylindrischer Bolzen
- 35: Fläche des Bolzens 33
- 37: Exzenterhebel
- 39: Bolzen

- B2: Abstandsbreite der Schenkel 2 und 3
- B3: Abstandsbreite der Schiebeflächen 7a und 8a
- E: Einstecken
- D: Drehen
- S: Schieben
- F: Feinpositionierung

## Patentansprüche

1. Montagesystem für Sanitäranlagen, -einrichtungen, Trockenbauinstallationen sowie Traggestelle oder Tragkonstruktionen, insbesondere für Wasch- und Spültischarmaturen nebst Anschlussleitungen, umfassend mindestens einen Profilkörper, ein oder mehrere Steckverbinder sowie ein oder mehrere Montageelemente, wobei die Montageelemente mittels der in den Profilkörper einführbaren Steckverbinder am Profilkörper befestigbar sind,
**dadurch gekennzeichnet, dass**
der Profilkörper als U-förmige Profilschiene (1) ausgebildet und längen- und/oder formveränderbar ist, wobei der Profilkörper (1) außenseitig längs seines Korpus (1) über längere Strecken offene und/oder geschlossene Abschnitte aufweist, die formveränderbar sind.

2. Montagesystem nach Anspruch 1,
**dadurch gekennzeichnet, dass**
die offenen und die geschlossenen Abschnitte des Profilkörpers (1) partiell oder über die gesamte Länge des Profilkörpers (1) eine identische Form und Größe aufweisen.

3. Montagesystem nach Anspruch 1 oder 2,
**dadurch gekennzeichnet, dass**
offene Abschnitte eines oder mehrerer Profilkörper (1) durch Montageelemente (15) schließbar und miteinander verbindbar sind.

4. Montagesystem nach mindestens einem der Ansprüche 1 bis 3,
**dadurch gekennzeichnet, dass**
in den offenen Abschnitten des Profilkörpers (1) unterschiedliche Montageelemente (15) zur Befestigung spezieller Halterungen angeordnet sind.

5. Montagesystem nach mindestens einem der Ansprüche 1 bis 4,
**dadurch gekennzeichnet, dass**
die U-förmige Profilschiene (1) aus einer Basis (1a) und von letzterer im wesentlichen gleichgerichtet sowie parallel zueinander und mit Abstand (B2) voneinander abragende Schenkel (2,3) besteht, wobei die Enden (4,5) der Schenkel (2,3) des Profilkörpers (1) nach innen gerichtet sind und in der Montagelage einen im Profilkörper (1) verschiebbar und zeitweise arretierbar vorgesehenen Steckverbinder (6) abschnittsweise umgreifen.

6. Montagesystem nach Anspruch 5,
**dadurch gekennzeichnet, dass**
die Enden (4,5) der Schenkel (2,3) des Profilkörpers (1) L-förmig nach innen abgebogen sind.

7. Montagesystem nach mindestens einem der Ansprüche 1 bis 6,
**dadurch gekennzeichnet, dass**
mittels eines Befestigungselementes (17) das Montageelement (15) mittels Steckverbinder (6) an dem Profilkörper (1) so befestigbar ist, dass es außenseitig längs des Profilkörpers (1) in unterschiedlichen Lagen positionierbar ist.

8. Montagesystem nach mindestens einem der Ansprüche 1 bis 7,
**dadurch gekennzeichnet, dass**
die nach innen abgebogenen Enden (4,5) der Schenkel (2,3) des Profilkörpers (1) in Profillängsrichtung verlaufende und nach oben gerichtete Aufkantungen aufweisen, deren Höhe und Weite dem aufsetzbaren Montageelement (15) entspricht.

9. Montagesystem nach mindestens einem der Ansprüche 1 bis 8,
**dadurch gekennzeichnet, dass**
der Steckverbinder (6) im wesentlichen rechteckig ausgebildet ist, wobei zwei einander gegenüberliegende Ecken Abflachungen aufweisen, so dass zwei parallel zueinander ausgebildete Seitenflächen (7,8) mit der Abstandsbreite B3 entstehen und wobei der Steckverbinder (6) mit den Seitenflächen (7,8) .im Profilkörper (1) längsverschiebbar ist.

10. Montagesystem nach mindestens einem der Ansprüche 1 bis 9,
**dadurch gekennzeichnet, dass**
der Steckverbinder (6) in einer Nut (9) mit den Begrenzungsflächen (10,11) einen Durchbruch (12) aufweist, in welchem ein Verbindungselement (13) mit Aufnahmen (14) für Befestigungselemente angeordnet ist.

11. Montagesystem nach mindestens einem der Ansprüche 1 bis 10,
**dadurch gekennzeichnet, dass**
das Montageelement (15) über Durchbrüche (16), durch die ein Befestigungselement (17) greift, mit dem Steckverbinder (6) und dem Verbindungselement (13) in Eingriff ist.

12. Montagesystem nach mindestens einem der Ansprüche 1 bis 11,
**dadurch gekennzeichnet, dass**
das Montageelement (15) als T- bzw. Doppel-T förmig ausgebildeter Horizontalverbinder ausgebildet auf den Profilkörper (1) aufsetzbar ist und mittels des Steckverbinders (6) positionierbar sowie befestigt ist.

13. Montagesystem nach mindestens einem der Ansprüche 1 bis 11,
**dadurch gekennzeichnet, dass**
das Montageelement (15) als Winkel- bzw. Winkelquerverbinder ausgebildet auf den Profilkörper (1) aufsetzbar ist und mittels des Steckverbinders (6) positionierbar sowie befestigt ist.

14. Montagesystem nach mindestens einem der Ansprüche 1 bis 11,
**dadurch gekennzeichnet, dass**
das Montageelement (15) als Außen-, verstellbarer Längenoder Befestigungswinkel auf den Profilkörper (1) aufsetzbar und mittels des Steckverbinders (6) positionierbar sowie befestigt ist.

15. Montagesystem nach mindestens einem der Ansprüche 1 bis 11,
**dadurch gekennzeichnet, dass**
das Montageelement (15) als Waschtisch- oder WC-Halter vorgesehen ist.

16. Montagesystem nach mindestens einem der Ansprüche 1 bis 15,
**dadurch gekennzeichnet, dass**
das Befestigungselement (17) zur Befestigung des Montageelementes (15) an dem Steckverbinder (6) als Klemmbolzen (22) mit einem Zapfen (23) ausgebildet ist, der durch den Durchbruch (16) des Montageelementes (15) sowie eine Durchgangsbohrung (18) mit einer Längsnute (19) des Verbindungselementes (13) steckbar und so drehbar ist, dass die durchgriffenen Bauelemente des Profilkörpers (1) gegeneinander verspannbar sind, wobei zur Befestigung eine Selbsthemmung der Keilverbindung erfolgt.

17. Montagesystem nach mindestens einem der Ansprüche 1 bis 15,
**dadurch gekennzeichnet, dass**
das Verbindungselement (13) einen zylindrischen Bolzen (26) aufweist, auf den eine Klemmkappe (28) mit einer Nase (29) aufsetzbar ist, wobei durch Drehung der Klemmkappe (28) mittels eines in der Klemmkappe (28) ausgebildetes Innensechskant (31) durch einen Schlüssel und gleiten der Nase (29) an einer Seitenwand der unter einem Winkel umlaufenden Nut (27) alle beteiligten Bauelemente (15,13) mit dem Profilkörper (1) gegeneinander verspannbar sind.

18. Montagesystem nach Anspruch 17,
**dadurch gekennzeichnet, dass**
die Klemmkappe (28) einen Hebel (32) zum Drehen der Klemmkappe (28) aufweist.

19. Montagesystem nach einem der Ansprüche 1 bis 18,
**dadurch gekennzeichnet, dass**
am Montageelement (15) ein zylindrischer Bolzen (33) mit einem Ansatz (36) befestigt ist, indem ein Exzenterhebel (37) mittels eines Bolzens (38) gelagert ist, wobei durch Drehung des Exzenterhebels (37) in eine Sollage und Herumkippen des Exzenterhebels (37) erfolgt das Verspannen der Bauelemente (15,13).
